(19) Europäisches Patentamt
European Patent Office
Office européen des brevets

(11) **EP 3 783 505 A1**

(12) **EUROPEAN PATENT APPLICATION**
published in accordance with Art. 153(4) EPC

(43) Date of publication:
**24.02.2021 Bulletin 2021/08**

(51) Int Cl.:
**G06F 16/957** *(2019.01)*     **G06F 16/48** *(2019.01)*

(21) Application number: **19802025.7**

(22) Date of filing: **22.08.2019**

(86) International application number:
**PCT/CN2019/102056**

(87) International publication number:
**WO 2020/258479 (30.12.2020 Gazette 2020/53)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.06.2019  CN 201910559472**

(71) Applicant: **Wangsu Science & Technology Co., Ltd.**
**Shanghai 200030 (CN)**

(72) Inventor: **HUANG, Xuehui**
**Shanghai 200030 (CN)**

(74) Representative: **Vinsome, Rex Martin**
**Urquhart-Dykes & Lord LLP**
**12th Floor**
**Cale Cross House**
**156 Pilgrim Street**
**Newcastle-upon-Tyne NE1 6SU (GB)**

(54) **WEBPAGE FRAME ACQUISITION METHOD, SERVER AND STORAGE MEDIUM**

(57)     Embodiments of the present disclosure relate to network technologies, and disclose a method for acquiring a webpage frame, a server, and a storage medium. In the present disclosure, a webpage address is acquired (101); a webpage snapshot data is acquired in real time according to the webpage address (102); the acquired webpage snapshot data is cached in a preset cache mode (103), where the cache mode at least includes a periodic cache mode configured to cache the webpage snapshot data within one period; and a target webpage frame is acquired according to the webpage snapshot data that is cached in the preset cache mode (104).

FIG. 1

EP 3 783 505 A1

**Description**

**CROSS-REFERENCE TO RELATED APPLICATIONS**

The present disclosure refers to Chinese Patent Application No. 201910559472.3, titled "METHOD FOR ACQUIRING WEBPAGE FRAME, SERVER, AND STORAGE MEDIUM" filed on June 26, 2019, which is incorporated by reference herein in its entirety.

**TECHNICAL FIELD**

Embodiments of the present disclosure relate to network technologies, and in particular, to a method for acquiring a webpage frame, a server, and a storage medium.

**BACKGROUND**

With the development of technologies such as HTML5 and JavaScript and continuous emergence of various front-end technologies of browser, contents included in a webpage frame are increasingly better presented. A user can acquire a webpage frame with rich contents from a network and apply the acquired webpage frame in daily life, for example, sent the contents included in the acquired webpage frame to a friend as an emoticon, and the like. Webpage snapshot data needs to be cached during acquisition of a webpage frame. Currently, the webpage snapshot data is generally cached in a process of webpage rendering, and the cached webpage snapshot data is processed when the user needs to acquire the webpage frame, so that the user obtains the desired webpage frame.

The inventor has found that at least the following problem exists in the related art: since webpage snapshot data is currently cached in only a single manner, efficiency of acquiring a webpage frame cannot be improved.

**SUMMARY**

Embodiments of the present disclosure are intended to provide a method for acquiring a webpage frame, a server, and a storage medium, to improve efficiency of acquiring a webpage frame.

In order to solve the above technical problem, an embodiment of the present disclosure provides a method for acquiring a webpage frame, applied to a server, including: acquiring a webpage address; acquiring a webpage snapshot data in real time according to the webpage address; caching the webpage snapshot data that is acquired in a preset cache mode; where the cache mode at least includes a periodic cache mode configured to cache the webpage snapshot data within one period; and acquiring a target webpage frame according to the webpage snapshot data that is cached in the preset cache mode.

An embodiment of the present disclosure further provides a server, including at least one processor; and a memory in communicative connection with the at least one processor; where the memory stores instructions executable by the at least one processor, and the instructions are executed by the at least one processor to cause the at least one processor to perform the method for acquiring a webpage frame described above.

An embodiment of the present disclosure further provides a storage medium storing computer programs, the computer programs are executed by a processor to implement a method for acquiring a webpage frame described above.

Compared to the existing technologies, in the embodiments of the present disclosure, the webpage snapshot data is cached in a preset periodic cache mode after the webpage snapshot data is acquired in real time according to the acquired webpage address. Since the webpage snapshot data within one period may be cached in the periodic cache mode, for periodic webpage snapshot data, the webpage snapshot data within a second period does not need to be cached, and only corresponding webpage snapshot data needs to be acquired from the webpage snapshot data within the first period, thereby improving efficiency of acquiring the target webpage frame according to the webpage snapshot data.

Additionally, the step of acquiring a target webpage frame according to the webpage snapshot data that is cached in the preset cache mode specifically includes: decoding the webpage snapshot data that is cached to acquire webpage frames; and selecting the target webpage frame from the webpage frames according to a timestamp of the webpage snapshot data that is cached. In this way, all cached webpage snapshot data may be decoded at one time, and then there is no need to perform decoding again, thereby greatly reducing decoding times.

Additionally, the step of acquiring a target webpage frame according to the webpage snapshot data that is cached in the preset cache mode specifically includes: selecting a target data from the webpage snapshot data that is cached according to a timestamp of the webpage snapshot data that is cached; and decoding the target data that is selected to acquire the target webpage frame. In this way, only the target data that is selected needs be decoded each time, and the target webpage frame is acquired upon decoding, so that the target webpage frame can be directly acquired without selection from the decoded data.

Additionally, after the step of acquiring the target webpage frame, the method further includes: deleting the target data that is selected. The decoded target data is deleted after the target webpage frame is acquired upon decoding of the selected target data, so that memory occupied by the webpage snapshot data is reduced.

Additionally, the step of caching the webpage snapshot data that is acquired in a preset cache mode specifically includes: selecting a target cache mode from a plurality of preset cache modes according to the webpage address; and caching the webpage snapshot data that is acquired in the target cache mode that is selected. When acquiring a webpage frame according to the webpage address each time, a cache mode that is appropriate for current webpage snapshot data is selected from the plurality of pre-stored cache modes, so that each cache mode for caching the webpage snapshot data is appropriate for the webpage snapshot data.

Additionally, the plurality of cache modes further include: a single cache mode. If the target cache mode is the single cache mode, the step of caching the webpage snapshot data that is acquired in the target cache mode that is selected specifically includes: caching one piece of webpage snapshot data, and decoding the one piece of webpage snapshot data that is cached to acquire the target webpage frame. The webpage snapshot data can also be cached in the single cache mode while in the periodic cache mode.

Additionally, after the step of acquiring the target webpage frame, the method further includes: deleting the webpage snapshot data that is cached. In this way, the memory occupied by the cached webpage snapshot data can be reduced.

Additionally, the target webpage frame is configured to be synthesized with a pre-acquired input video; and after the step of acquiring target webpage frame and before the target webpage frame is synthesized with the pre-acquired input video, the method further includes: adjusting a pixel format of the target webpage frame and a pixel format of a video frame to be synthesized to be the same. In this way, the acquired target webpage frame may be synthesized with the video frame to be synthesized, so as to add words, pictures, and animation effects to a video to be synthesized, thereby enriching video pictures of the video to be synthesized, and making video effect of the video to be synthesized more vivid.

## BRIEF DESCRIPTION OF THE DRAWINGS

One or more embodiments are described by way of example with reference to the corresponding figures in the accompanying drawings, and the descriptions are not to be construed as limiting the embodiments. Elements in the accompanying drawings that have same reference numerals are represented as similar elements, and the figures in the accompanying drawings are not drawn to scale unless particularly stated.

FIG. 1 is a flowchart of a method for acquiring a webpage frame according to a first embodiment of the present disclosure;

FIG. 2 is a flowchart of acquiring a webpage snapshot data according to a first embodiment of the present disclosure;

FIG. 3 is a flowchart of monitoring a state of a browser and a state of connection with browser according to a first embodiment of the present disclosure;

FIG. 4 is a flowchart of a method for acquiring a webpage frame according to a second embodiment of the present disclosure;

FIG. 5 is a flowchart of a method for acquiring a webpage frame when a cached data is of a period less than one period according to a second embodiment of the present disclosure;

FIG. 6 is a flowchart of a method for acquiring a webpage frame according to a third embodiment of the present disclosure;

FIG. 7 is a flowchart of a method for acquiring a webpage frame according to a fourth embodiment of the present disclosure;

FIG. 8 is a flowchart of a method for acquiring a webpage frame according to a fifth embodiment of the present disclosure; and

FIG. 9 is a schematic structural diagram of a server according to a sixth embodiment of the present disclosure.

**DETAILED DESCRIPTION**

In order to clarify the object, the technical solutions, and the advantages of the embodiments of the present disclosure, the embodiments of the present disclosure will be further described in details with reference to the accompanying drawings. Those skilled in the art may understand that many technical details are provided in the embodiments of the present disclosure to help readers better understand the present disclosure. However, the technical solutions claimed in the present disclosure can be implemented without these technical details, and various changes and modifications based on the following embodiments.

The following embodiments are divided for the ease of description, and should not be construed as limiting the detailed description of the present disclosure. The embodiments may be combined with each other and reference may be made to each other as long as no contradiction occurs.

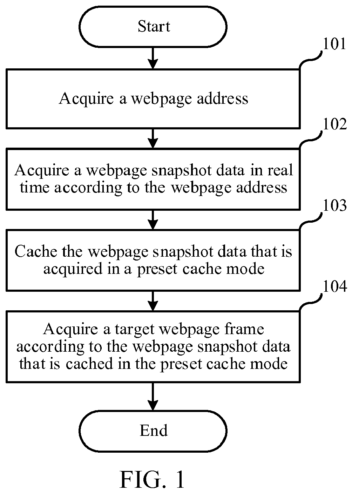

A first embodiment of the present disclosure relates to a method for acquiring a webpage frame. A webpage address is acquired. A webpage snapshot data is acquired in real time according to the webpage address. The acquired webpage snapshot data is cached in a preset cache mode, where the cache mode at least includes a periodic cache mode configured to cache the webpage snapshot data within one period. And a target webpage frame is acquired according to the webpage snapshot data that is cached in the preset cache mode, thereby improving efficiency of acquiring the webpage frame according to specific webpage snapshot data. A specific procedure is shown in FIG. 1.

In step 101, a webpage address is acquired. Specifically, the acquired webpage address may be a webpage address of the Internet such as Baidu or YOUKU, or may be a template address including a specific webpage frame. The specific webpage frame included in the template address is specifically some specific layout effects or elements with a fixed layout style and element typesetting.

In step 102, the webpage snapshot data is acquired in real time according to the webpage address. Specifically, a server may control a browser to access a preset webpage address, and control the browser to render a webpage picture and acquire the webpage snapshot data when acquiring the webpage snapshot data. When the browser is controlled to access the preset webpage address, the controlled browser needs to support a development tool debugging protocol, such as a devtools protocol of Google Chrome, and the like. The server may control a behavior of the browser and acquire related information such as a browser webpage and a network via the development tool debugging protocol. In this embodiment, the acquired webpage snapshot data is specifically periodic webpage snapshot data, and one or more webpage frames are obtained after the webpage snapshot data is decoded. If pictures within the webpage frames are different, the decoded webpage snapshot data corresponding to the webpage frames are also different. If pictures within two webpage frames are identical, two pieces of webpage snapshot data corresponding to two webpage frames are also identical. There is an existing group of webpage frames, and pictures within a first webpage frame to a fifth webpage frame are all different. However, a picture within a six webpage frame is identical to the picture within the first webpage frame, a picture within a seventh webpage frame is identical to the picture within the second webpage frame, and the like, a picture within a tenth webpage frame is identical to the picture within the fifth webpage frame, a picture within an eleventh webpage frame is identical to the picture within the first webpage frame again, and so on. The decoded webpage snapshot data corresponding to the group of webpage frames is the periodic webpage snapshot data in this embodiment.

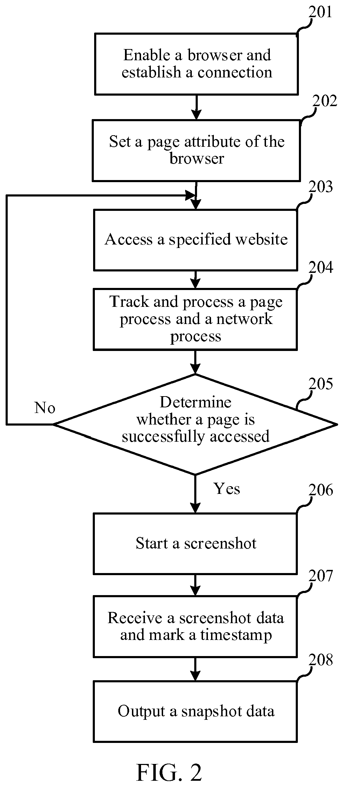

The following describes that the browser is controlled to render the webpage picture and the webpage snapshot data is acquired. A process thereof is shown in FIG. 2.

In step 201, the browser is enabled and a communication connection is established with the browser. Specifically, debug-related parameters such as a debug port, a security option, and the like, are set as required, a progress of the browser is enabled, and a communication connection is established with the browser according to the communication protocol, i.e. the development tool debugging protocol, so as to send a control instruction to the browser for controlling a behavior of the browser and acquiring information related to the behavior of the browser

In step 202, a page attribute of the browser is set. Specifically, page-related attributes of the browser need to be set to synthesize the target webpage frame with a video frame to be synthesized. The page attributes that are set mainly include resolution, background color information, and interaction setting, and the like, to ensure that the webpage snapshot data meets the preset page attributes. During specific implementation, a resolution of the browser page is set to be the same as a resolution of a picture of an output video, and a background color may be set to a transparent color. In this way, except for page elements of the obtained webpage snapshot data such as words, animation, and input boxes, and the like, a background section of the webpage is transparent, thereby helping synthesize the acquired target webpage frame with the video frame to be synthesized, and reducing the processing of an acquired webpage screenshot before the synthesis. In addition, an operation related to a human-computer interaction in the webpage may affect quality of the acquired webpage snapshot data. Therefore, during specific implementation, the operation related to human-computer interaction may be forbidden, for example, a dialog box is forbidden from popping up in a webpage, or no scroll bar is displayed in a webpage.

In step 203, a specified website is accessed. Specifically, a preset webpage address may be accessed to acquire the webpage snapshot data after the webpage-related attributes are set. The server sends a control instruction of accessing the specified website to the browser according to the preset webpage address, and the browser accesses the specified website after receiving the control instruction.

In step 204, a page process and a network process are tracked and processed. Specifically, while the browser is accessing the specified website, an instruction of tracking the page process and the network process is sent to the browser using the development tool debugging protocol, and corresponding information related to the page process and the network process is received and processed. The page process includes: processes such as creation of a page, start of a page loading, and completion of a loading, and the like, and related events. The network process includes: processes such as start of a network request, failure of a network request, success of a network request, and data receiving, and the like, and related events. It may be learned whether the specified webpage is successfully accessed by tracking the page process and the network process.

In step 205, it is determined whether the page is successfully accessed, and if yes, proceed to step 206; or if not, return to step 203. Specifically, a certain number of retries may be made if the access fails. And error information is fed back to the external and the process is stopped if the access still fails after a plurality of retries. If the access succeeds, the page screenshot may be performed when the page loading is completed to acquire a screenshot data, and the screenshot data is stored as the webpage snapshot data to ensure that the acquired webpage snapshot data is valid data.

In step 206, screenshot is started. Specifically, after success of the page access and completion of the page loading are tracked, a screenshot instruction may be sent to the browser to acquire a webpage screenshot at the current moment returned by the browser as a current webpage snapshot data. Since picture contents of the webpage may constantly change, or may not change within a specific time period, different screenshot ways are required for different picture contents, so that resource consumption may be reduced during acquisition of the webpage snapshot data.

A screen instruction may be periodically sent to the browser to acquire latest picture contents when the picture contents of the webpage constantly change, for example, when the webpage includes animation or scrolling texts, and the like. A periodic interval may be set according to a frame rate of a video picture to be synthesized. For example, when the frame rate of the video picture to be synthesized is 25 frames per second, a duration of one frame is $1/25 = 0.04$ seconds, that is, 40 milliseconds. This means that there is one input video frame every other 40 milliseconds. Since contents of the webpage need to be synthesized into the input video and there is one input video frame every other 40 milliseconds, one webpage frame is also required every other 40 milliseconds. Therefore, an interval time may be set to 40 milliseconds, so that each frame of the video to be synthesized may correspond to a webpage content screenshot. The webpage snapshot data may be acquired only once within a specific time period if the picture contents of the webpage do not change within the time period, and the browser may be requested, via the development tool debugging protocol, to actively return new picture screenshot data only when the webpage contents change. In this way, there is no need to set the interval time to periodically send a screenshot instruction to the browser, the browser only needs to be requested once so that it may actively return a screenshot of latest changed webpage contents when the webpage contents change, thereby preventing clipping repeated webpage contents.

In step 207, a screenshot data is received and a timestamp is marked. Specifically, the browser returns the screenshot data of the webpage in a following process after the screenshot instruction is sent to the browser. Since the webpage is generally dynamic, the latest screenshot data of the webpage is constantly generated. In order to differentiate the screenshot data at different moments, the timestamp needs to be marked for the screenshot data. If the browser returns both the screenshot data of the webpage and the timestamp of a moment at which the browser renders a picture corresponding to the screenshot data, the received timestamp that is returned by the browser is set as the timestamp of the screenshot data. If the browser returns the screenshot data of the webpage without a corresponding timestamp, a system timestamp of a moment at which the browser returns the screenshot data of the webpage may be used as the timestamp of the screenshot data, and the screenshot data of the webpage for which the timestamp is marked is stored as the webpage snapshot data at the current moment.

In step 208, the webpage snapshot data is output.

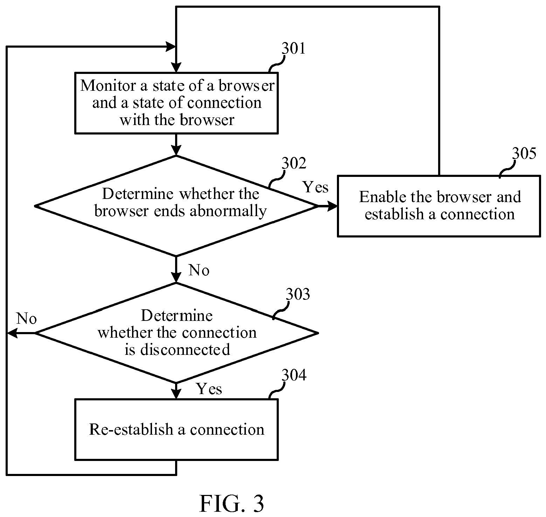

Additionally, a state of the browser and a state of connection with the browser are monitored after the browser is enabled. Details are shown in FIG. 3.

In step 301, the state of the browser and the state of connection with the browser are monitored.

In step 302, it is determined whether the browser ends abnormally, and if yes, proceed to step 305 and then return to 301; or if not, proceed to step 303.

In step 303, it is determined whether a connection is disconnected, and if yes, proceed to step 304; or if not, return to step 301.

In step 304, the connection is re-established.

In step 305, the browser is enabled and the connection is established.

Specifically, the browser and the connection with the browser need to be monitored in the process of controlling the browser and acquiring the screenshot data of the webpage via the development tool debugging protocol. If the browser operates normally but an abnormal disconnection with the browser is monitored, previous operations, i.e. control instruction sending and control instruction responding and receiving, continue after a communication connection is re-established with the browser. If an abnormal ending of the browser is monitored, the browser needs to be enabled again, and the state of the browser and the state of connection with the browser needs to be detected again.

In actual application, when the browser is controlled to render the webpage and acquire the screenshot of the webpage, the browser only needs to render contents of the webpage and obtain the screenshot data of the webpage without a need to display the webpage contents on a screen, therefore, the browser may be set to a non-graphic interface mode. The browser does not create a display window, and is therefore independent of a graphic interface, so that the above method for acquiring the webpage snapshot data is also applicable to a server terminal without a graphic interface environment. In addition, since no visible window is created, resource consumption can be reduced.

After the step of the webpage snapshot data is acquired, step 103 of caching the webpage snapshot data that is acquired in a preset cache mode is performed. Specifically, periodicity of the acquired webpage snapshot data in this embodiment specifically described in the above description. The preset cache mode for this kind of webpage snapshot data is also somewhat special. Assuming that there is a repeated webpage frame every five frames after the acquired webpage snapshot data is decoded, that is, a webpage picture of a sixth webpage frame is identical to a webpage picture of a first webpage frame. That is, webpage snapshot data is cached in the preset cache mode means to the webpage snapshot data corresponding to the first webpage frame to the fifth webpage frame is cached. This kind of cache mode is referred to as a periodic cache mode.

In step 104, a target webpage frame is acquired according to the webpage snapshot data that is cached in the preset cache mode. Specifically, the target webpage frame may be acquired from the cached webpage snapshot data by selecting from all decoded webpage frames obtained after all the cached webpage snapshot data is decoded. In this way, decoding is only required once, so that decoding actions are reduced. Alternatively, a target data may be first selected from the webpage snapshot data, and then the target data is decoded to obtain the target webpage frame. In this way, the decoded webpage snapshot data occupies less memory during decoding.

Compared to the existing technologies, in the embodiment of the present disclosure, the webpage snapshot data is cached in a preset periodic cache mode after the webpage snapshot data is acquired in real time according to the acquired webpage address. Since the webpage snapshot data within one period may be cached in the periodic cache mode, for a periodic webpage snapshot data, there is no need to cache the webpage snapshot data within a second period, but only to acquire corresponding webpage snapshot data from the webpage snapshot data within the first period, thereby improving efficiency of acquiring the target webpage frame according to the webpage snapshot data.

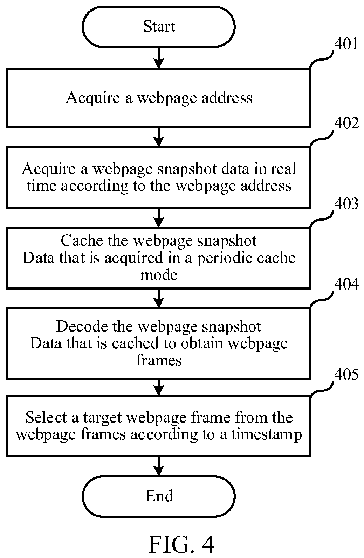

A second embodiment of the present disclosure relates to a method for acquiring a webpage frame. In the second embodiment of the present disclosure, one of periodic cache modes is described in detail, which is shown in FIG. 4.

In step 401, a webpage address is acquired.

In step 402, a webpage snapshot data is acquired in real time according to the webpage address.

In step 403, the acquired webpage snapshot data is cached in the periodic cache mode.

In step 404, the cached webpage snapshot data is decoded to obtain webpage frames.

In step 405, a target webpage frame is selected from the webpage frames according to a timestamp.

Specifically, all cached webpage snapshot data is decoded once, and then after necessary pixel format conversion is performed on all decoded raw video frames, a webpage frame list is formed. A timestamp of each webpage frame in the list is a timestamp of each corresponding webpage snapshot data for generating the webpage frame, and the target webpage frame is selected one by one from the webpage frame list. In this way, all the cached webpage snapshot data can be decoded once, and the webpage snapshot data does not need to be decoded again in a subsequent process. Instead, only the target webpage frame needs to be selected from the webpage frame list according to a timestamp of a video frame to be synthesized. It can be seen that in such implementation of the periodic cache mode, consumption of computing resources for decoding and format conversion can be reduced.

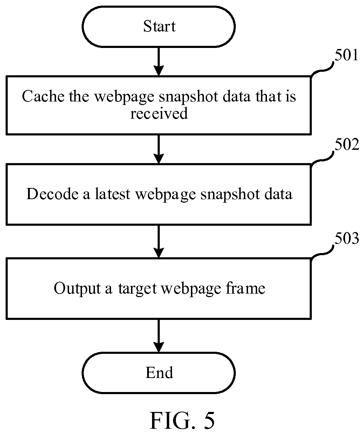

The above description shows a process of acquiring the target webpage frame according to the cached webpage snapshot data after the webpage snapshot data of one period is cached in the periodic cache mode. A process of acquiring the target webpage frame according to the cached webpage snapshot data of a period less than one period is described below. Details are shown in FIG. 5.

In step 501, a received webpage snapshot data is cached.

In step 502, a latest webpage snapshot data is decoded to obtain a target webpage frame.

In step 503, the target webpage frame is output.

Specifically, the latest cached webpage snapshot data is decoded to obtain the target webpage frame when the cached data is of a period less than one period. In this way, a webpage frame may also be output during cache without a need to wait for the cached data to reach one period, thereby reducing time waiting for the cache.

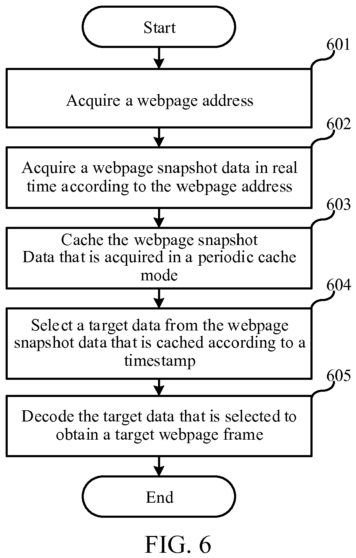

A third embodiment of the present disclosure relates to a method for acquiring a webpage frame. The third embodiment further describes the first embodiment in detail, in the following: in the third embodiment of the present disclosure, another of the periodic cache modes is described in detail, which is shown in FIG. 6.

In step 601, a webpage address is acquired.

In step 602, a webpage snapshot data is acquired in real time according to the webpage address.

In step 603, the acquired webpage snapshot data is cached in a periodic cache mode.

In step 604, a target data is selected from the cached webpage snapshot data according to a timestamp.

In step 605, the selected target data is decoded to obtain a target webpage frame.

Specifically, after the webpage snapshot data of one period is cached in the periodic cache mode, a webpage rendering process is stopped, and a required webpage snapshot data is selected from the cached webpage snapshot data, to obtain the target webpage frame. The target data may be selected according to the timestamp. For example, the target data is determined according to the timestamp of a video frame to be synthesized if the target webpage frame needs to be synthesized with the video frame to be synthesized. A rule for selecting the webpage snapshot data is as follows. Assuming that the cached webpage snapshot data is arranged in ascending order of timestamp as $WTS_1$, $WTS_2$, ...$WTS_n$, webpage picture contents corresponding to the webpage snapshot data whose timestamps are $WTS_1$ and $WTS_n$ are identical, and the timestamps $WTS_1$ and $WTS_n$ represent a start and an end of one period. Therefore, it can be seen that a duration T of a webpage picture corresponding to the cached webpage snapshot data is $T = WTS_n - WTS_1$. Taking the above synthesis of the target webpage frame and the video frame to be synthesized as an example, assuming that a timestamp of the video to be synthesized is $ITS_1$ when the target webpage frame starts to be synthesized into an output video picture. Then, when the timestamp of the video to be synthesized is $ITS_k$, a first webpage snapshot data whose timestamp is less than or equal to $mod(ITS_k - ITS_1, T) + WTS_1$ is searched in descending order of timestamp from the cached webpage snapshot data, and is taken as a target data to obtain the target webpage frame, and the target webpage frame is synthesized with the video to be synthesized to obtain a final output picture. The above mod represents a generalized remainder obtaining operation, that is, for two positive numbers x and y, $mod(x, y)$ is a number that is greater than or equal to 0 and that is less than y, so that there is a nonnegative integer p meeting $x = p * y + mod(x, y)$. In order to reduce an occupancy rate of the memory, in actual application, the target data is deleted after the target data is decoded to obtain the target webpage frame, thereby reducing the memory occupied by the cached webpage snapshot data.

The above description shows a process of obtaining the target webpage frame according to the cached webpage snapshot data after the webpage snapshot data of one period is cached in the periodic cache mode. When the cached webpage snapshot data is of a period less than one period, a process of obtaining the webpage frame according to the cached webpage snapshot data is the same as step 501 to step 503 in the second embodiment, and details are not described herein again.

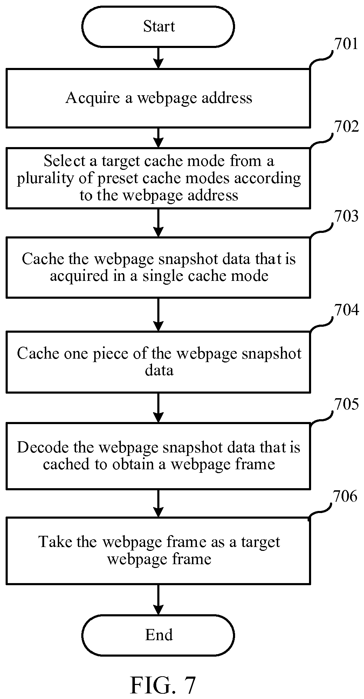

A fourth embodiment of the present disclosure relates to a method for acquiring a webpage frame. The fourth embodiment further describes the first embodiment in detail, mainly in the following: in the fourth embodiment of the present disclosure, a single cache mode is further included, which is shown in FIG. 7.

In step 701, a webpage address is acquired.

In step 702, a target cache mode is selected from a plurality of preset cache modes according to the webpage address.

In step 703: an acquired webpage snapshot data is cached in the single cache mode.

In step 704, one piece of webpage snapshot data is cached.

In step 705, the cached webpage snapshot data is decoded to obtain a webpage frame.

In step 706, the webpage frame is taken as a target webpage frame.

Specifically, when the webpage snapshot data is cached in the single cache mode, only latest webpage snapshot data needs to be cached, and the cached webpage snapshot data is decoded to obtain a webpage frame. It is determined whether the obtained webpage frame is the same as the target webpage frame. If yes, the obtained webpage frame is taken as the target webpage frame. If not, next piece of webpage snapshot data is acquired, and the previously cached webpage snapshot data is deleted, so as to ensure that the cached webpage snapshot data is always the latest acquired webpage snapshot data.

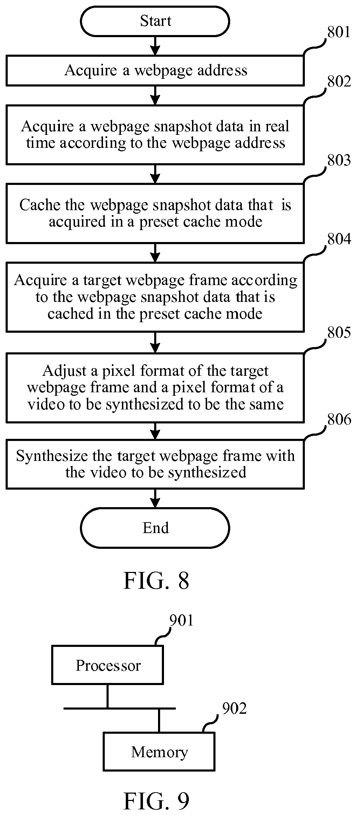

A fifth embodiment of the present disclosure relates to a method for acquiring a webpage frame. In the fifth embodiment of the present disclosure, pixel formats of an acquired target webpage frame and a video frame to be synthesized are adjusted. Details are shown in FIG. 8.

In step 801, a webpage address is acquired.

In step 802, the webpage snapshot data is acquired in real time according to the webpage address.

In step 803, an acquired webpage snapshot data is cached in a preset cache mode.

In step 804, a target webpage frame is acquired according to the webpage snapshot data that is cached in the preset cache mode.

In step 805, a pixel format of the target webpage frame and a pixel format of a video frame to be synthesized are adjusted to be the same. Specifically, when the pixel formats of the video frame to be synthesized and the target webpage frame are different, the pixel format needs to be converted, so that the target webpage frame and the video frame to be synthesized can be synthesized in a specific synthesis mode in terms of pixel. For example, a most common format of the video frame to be synthesized is YUV420P, while the webpage snapshot data is a PNG image, and a format of a raw video frame of a decoded webpage snapshot data is RGB24. In this case, a pixel formatting conversion needs to be performed on the webpage frame in an RGB24 format, and after the webpage frame in the RGB24 format is converted into a webpage frame in a YUV420P format, the webpage frame in the YUV420P format is synthesized with the video frame to be synthesized to obtain a final output video.

Additionally, a matting process may be performed on the target webpage frame to obtain webpage contents to be finally synthesized with the video frame to be synthesized after the target webpage frame is acquired. Specifically, the matting process needs to be performed on the target webpage frame if a background color of a webpage of the target webpage frame is not transparent. During the matting process, one or more colors (generally, a background color) may be preset. If a color of a pixel point in a picture of the target webpage frame is similar to the preset color within a specific degree, the pixel point is set to be completely transparent. In this way, a picture portion corresponding to a significant page element in the target webpage frame can be retained and is finally synthesized into the video to be synthesized.

In step 806, the target webpage frame is synthesized with the video frame to be synthesized.

Specifically, the video to be synthesized may be a video obtained via photographing by a camera, screen capture, or decoding of a source video. The acquired target webpage frame is synthesized with the video frame to be synthesized, so that picture contents of the video to be synthesized are enriched, and an expressive force of the video is enhanced. For example, the target webpage frame may be a webpage frame including a specific effect, a paragraph of words, or a picture. The acquired target webpage frame is synthesized to a specified position of the video frame to be synthesized, and a final output video picture includes both contents included in the video frame to be synthesized and contents included in the target webpage frame after the synthesis. Since there may be a plurality of target webpage frames synthesized into the video to be synthesized, each of them may be different, that is, the webpage address for acquiring the target webpage frame may be changed in real time during playing of the video to be synthesized. For example, a first target webpage frame needs to be synthesized at a second minute of the video to be synthesized, and the first target webpage frame is acquired from Baidu. A second target webpage frame needs to be synthesized at a fourth minute of the video to be synthesized, and the second target webpage frame is acquired from a webpage of YOUKU. So, when the video to be synthesized plays to the second minute, the webpage address of Baidu is acquired, the webpage snapshot data of the Baidu webpage is further acquired, the first target webpage frame is acquired according to the webpage snapshot data, and the acquired first target webpage frame is synthesized with a video frame at the second minute of the video to be synthesized. In this time, an output video which a user watches is the video to be synthesized in which the first target webpage frame has been synthesized into. When the video to be synthesized plays to the fourth minute, the webpage address of YOUKU is acquired, the webpage snapshot data of the YOUKU webpage is further acquired, the second target webpage frame is acquired according to the webpage snapshot data, and the acquired second target webpage frame is synthesized with a video frame at the fourth minute of the video to be synthesized. In this time an output video which the user watches is the video to be synthesized in which the second target webpage frame has been synthesized into. It can be seen from the output video picture that special effects of these webpages are superimposed on the video picture to be synthesized, so that a live picture becomes more vivid.

In actual application, the output video may be a live video or a video demanded by a user. If the output video is a live video, a streaming media server may be utilized to cache the live video during live broadcast, and a target webpage frame is acquired when a synthesis operation is required. The target webpage frame is synthesized with the cached live video, to finally output a synthesized live video. If the output video is a video on demand, a target webpage frame is acquired when the server is transcoding the video on demand, and the target webpage frame is synthesized with the video on demand, to finally output a synthesized video on demand.

The target webpage frame may be taken as a foreground picture and the video frame to be synthesized may be taken as a background picture when the target webpage frame is synthesized with the video frame to be synthesized. In other words, the picture of the target webpage frame shields the picture of the video frame to be synthesized if picture contents of the video frame to be synthesized and the target webpage frame in a region of the output picture are overlapped, that is, the picture of the video frame to be synthesized is at the bottom and the picture of the target webpage frame is at the top. Similarly, the target webpage frame may be taken as a background picture and the video frame to be synthesized may be taken as a foreground picture when the target webpage frame is synthesized with the video frame to be synthesized, that is, the picture of the video frame to be synthesized is at the top and the picture of the target webpage frame is at the bottom.

A synthesis mode may include a full-picture synthesis and a region synthesis according to a size of the target webpage frame in the output picture that is finally synthesized. Full-picture synthesis means that an area occupied by the target webpage frame in the final output video picture is equal to an area of an output video picture, that is, the target webpage frame spreads all over the entire output video picture. Regional synthesis means that the area occupied by the target webpage frame in the final output video picture is less than the area of the output video picture, that is, the target webpage frame occupies only partial region of the output video picture.

In actual application, assuming that a resolution of the output picture is $W_o * H_o$, that is, a width of the output video picture is $W_o$ pixels, and a height of the output video picture is $H_o$ pixels. Generally, a resolution of a final output video picture is the same as a resolution of a video frame to be synthesized. Assuming that a position of the target webpage frame in the output video picture is (p,q), and a size thereof is $W_w * H_w$, that is, a width of the target webpage frame in the output video picture is $W_w$ pixels, and a height of the target webpage frame in the output video picture is $H_w$ pixels. A pixel point on a top left corner of the target webpage frame is away from a pixel point on a top left corner of the output video picture by p pixel points rightward and q pixel points downward. Assuming that transparency of each pixel point in the target webpage frame is normalized to an interval of [0,1]. A transparency of 0 represents full transparency, and a transparency of 1 represents complete opacity. A step of synthesizing the target webpage frame with the video frame to be synthesized to obtain the final output video frame is as follows.

First, contents of the webpage to be synthesized are zoomed. If the synthesis mode is the full-picture synthesis, the target webpage frame is zoomed to be the same as the output video picture when a resolution of the target webpage frame is different from a resolution of the outputted video picture, that is, $W_w = W_o$, $H_w = H_o$. If the synthesis mode is a specified region synthesis, the target webpage frame is zoomed to a size that matches the specified region according to a configured size of the region.

Next, transparencies of the pixel points of the target webpage frame and the video frame to be synthesized are adjusted, and the adjusted pixel points of the target webpage frame and the video frame to be synthesized are synthesized. When the synthesis mode is the full-picture synthesis, it is assumed that a pixel point in a final synthesized output video picture is $Out_{i,j}$, where i and j are respectively location indices of the pixel points in a horizontal direction and a vertical direction, i represents a displacement of the pixel point in the horizontal direction from the pixel point on the top left corner of the output video picture, j represents a displacement of the pixel point in the vertical direction from the pixel point on the top left corner of the output video picture, and $0 \leq i < W_o$ and $0 \leq j < H_o$. A pixel value of each pixel point in the final output video picture is calculated via the following formula:

$$Out_{i,j} = \left(1 - \alpha_{i,j}\right) * In_{i,j} + \alpha_{i,j} * Web_{i,j},$$

where, $\alpha_{i,j}$ is a transparency value of a pixel point at a position of (i,j) in the zoomed target webpage frame, $In_{i,j}$ is a pixel value of a pixel point at a position of (i,j) in the video frame to be synthesized, and $Web_{i,j}$ is a pixel value of a pixel point at a position of (i,j) in the zoomed target webpage frame.

For example, when the transparency of each pixel of the target webpage frame includes only full transparency and complete opacity, that is, a value of $\alpha_{i,j}$ is only 0 or 1, the pixel value of each pixel point in the output video picture is:

$$Out_{i,j} = \begin{cases} In_{i,j} & , \text{when } \alpha_{i,j} = 0 \\ Web_{i,j} & , \text{when } \alpha_{i,j} = 1 \end{cases}.$$

It may be learned from the above formula that if a pixel point in the zoomed target webpage frame is completely opaque, a pixel value of a pixel point at a corresponding position in the output video picture is a pixel value of the pixel point in the zoomed target webpage frame. If a pixel point in the zoomed target webpage frame is fully transparent, a pixel value of a pixel point at a corresponding position in the output video picture is a pixel value of a pixel point at the corresponding position in the video to be synthesized. If the fully transparent pixel point in the target webpage frame is obtained via the matting of a background color of the target webpage frame, or is obtained via setting the background color to a transparent color during rendering the webpage picture using a browser, only non-background portions such as animation and elements in the webpage picture are retained in the final output video picture and are superimposed over the video frame to be synthesized.

Additionally, when the synthesis mode is the specified region synthesis, in the final synthesized output video picture, except for a specified region occupied by the zoomed target webpage frame, values of pixel points in other regions are equal to values of pixel points at corresponding positions of the video frame to be synthesized. In the specified region occupied by the zoomed target webpage frame, a synthesis method similar to the full-picture synthesis is used. A pixel value of each pixel point in the final output video picture is

$$Out_{i,j} = \begin{cases} In_{i,j} & , \text{in other cases} \\ \left(1 - \alpha_{i-p,j-q}\right) * In_{i,j} + \alpha_{i-p,j-q} * Web_{i-p,j-q} & , \text{when } (i,j) \in S \end{cases},$$

a region S is a specified region occupied by the zoomed target webpage frame in the output video picture, that is, a region that meets the following limiting conditions:

$$p \leq i < p + W_w \text{ and } q \leq j < q + H_w.$$

It should be noted that the above examples are assumptions for detailed description of synthesis principles of the embodiments of the present disclosure. However, the synthesis ways are not limited to the above synthesis ways in actual application, and different synthesis solutions may be performed according to different demands. For example, the resolution of the final output video picture may be unequal to the resolution of the video to be synthesized, and in this case, the video frame to be synthesized needs to be zoomed in a way similar to that for the target webpage frame. For another example, the video frame to be synthesized may also be taken as a foreground picture, and the target webpage frame may be taken as a background picture. Alternatively, the video frame to be synthesized does not spread all over the entire output video picture, but occupies only a certain region of the final output video picture. In this case, the video frame to be synthesized needs to be synthesized in a specified region according to a position of the region without a need to spread all over the entire output video picture.

The above steps are divided only for clear description. During implementation, the steps may be merged into one step, or some steps may be split into a plurality of steps. Those including same logic relationships shall fall within the protection scope of the present disclosure. Inessential modification added or inessential design introduced to the algorithm or process, which does not change core design of the algorithm or the process thereof, shall fall within the protection scope of the present disclosure.

A sixth embodiment of the present disclosure relates to a server, as shown in FIG. 9, including at least one processor 901 and a memory 902 in communicative connection with the at least one processor 901, where the memory 902 stores instructions executable by the at least one processor 901, and the instructions are executed by the at least one processor 901 to cause the at least one processor 901 to perform the method for acquiring the webpage frame described above.

The memory 902 is connected to the processor 901 in a bus manner, the bus may include any number of interconnected buses and bridges, and the bus connects one or more processors 901 to various circuits of the memory 902. The bus may further connect various other circuits such as circuits of a peripheral device, circuits of a voltage regulator, and power management circuits together. These are all known in the art, and therefore are not further described in the present disclosure. A bus interface provides an interface between the bus and a transceiver. The transceiver may be one component or a plurality of components, for example, a plurality of receivers and transmitters, and provides units for communicating with various other apparatuses on a transmission medium. The data processed by the processor 901 is transmitted on a wireless medium via an antenna. Further, the antenna receives the data and transfers the data to the processor 901.

The processor 901 is responsible for managing the bus and the usual processing, and may also provide various functions including timing, peripheral interface, voltage adjustment, power management, and another control functions. The memory 902 may be used to store the data used by the processor 901 in performing operations.

A seventh embodiment of the present disclosure relates to a compute readable storage medium storing computer programs. The computer programs are executed by a processor to implement the method for acquiring a webpage frame described above.

That is, those skilled in the art may understand that all or some of the steps for implementing the methods in the above embodiments may be completed via instructing related hardware by a program. The program is stored in a storage medium, including several instructions for enabling one device (which may be a single-chip microcomputer, a chip, or the like) or a processor to perform all or some of the steps of the methods described in the embodiment of the present disclosure. The above storage medium includes: any medium that can store program code, such as a USB flash disk, a removable hard disk, a read-only memory (ROM), a random access memory (RAM), a magnetic disk, or a disc.

Those skilled in the art can understand that the above embodiments are specific embodiments for implementing the present disclosure, and in the actual application, various changes may be made in form and detail without departing from the spirit and scope of the present disclosure.

**Claims**

**1.** A method for acquiring a webpage frame, applied to a server, comprising:

  acquiring a webpage address;
  acquiring a webpage snapshot data in real time according to the webpage address;

caching the webpage snapshot data that is acquired in a preset cache mode; wherein the cache mode comprises a periodic cache mode configured to cache the webpage snapshot data within one period; and acquiring a target webpage frame according to the webpage snapshot data that is cached in the preset cache mode.

2. The method for acquiring a webpage frame according to claim 1, wherein acquiring the target webpage frame according to the webpage snapshot data that is cached in the preset cache mode specifically comprises:

decoding the webpage snapshot data that is cached to obtain webpage frames; and selecting the target webpage frame from the webpage frames according to a timestamp of the webpage snapshot data that is cached.

3. The method for acquiring a webpage frame according to claim 1, wherein acquiring the target webpage frame according to the webpage snapshot data that is cached in the preset cache mode specifically comprises:

selecting a target data from the webpage snapshot data that is cached according to a timestamp of the webpage snapshot data that is cached; and decoding the target data that is selected to obtain the target webpage frame.

4. The method for acquiring a webpage frame according to claim 3, after obtaining the target webpage frame, the method further comprises:
deleting the target data that is selected.

5. The method for acquiring a webpage frame according to claim 1, wherein caching the webpage snapshot data that is acquired in a preset cache mode specifically comprises:

selecting a target cache mode from a plurality of preset cache modes according to the webpage address; and caching the webpage snapshot data that is acquired in the target cache mode that is selected.

6. The method for acquiring a webpage frame according to claim 5, wherein the plurality of preset cache modes at least comprise a single cache mode; and
if the target cache mode is the single cache mode, the step of caching the webpage snapshot data that is acquired in the target cache mode that is selected specifically comprises:

caching the webpage snapshot data corresponding to one webpage frame; and decoding the webpage snapshot data that is cached to obtain the target webpage frame.

7. The method for acquiring a webpage frame according to claim 6, after obtaining the target webpage frame, the method further comprises:
deleting the webpage snapshot data that is cached.

8. The method for acquiring a webpage frame according to any of claims 1 to 7, wherein the target webpage frame is configured to be synthesized with a pre-acquired input video; and
after the target webpage frame is acquired and before the target webpage frame is synthesized with the pre-acquired input video, the method further comprises:
adjusting a pixel format of the target webpage frame and a pixel format of a video frame to be synthesized to be the same.

9. A server, comprising:

at least one processor; and
a memory in communicative connection with the at least one processor;
wherein the memory stores instructions executable by the at least one processor, and

the instructions are executed by the at least one processor to cause the at least one processor to perform the method for acquiring a webpage frame according to any of claims 1 to 8.

10. A computer readable storage medium storing computer programs, wherein the computer programs are executed by a processor to implement the method for acquiring a webpage frame according to any of claims 1 to 8.

```
                    ┌─────────────────┐
                    │      Start      │
                    └────────┬────────┘
                             │                        101
              ┌──────────────▼──────────────┐ ╮
              │   Acquire a webpage address  │
              └──────────────┬──────────────┘
                             │                        102
              ┌──────────────▼──────────────┐ ╮
              │ Acquire a webpage snapshot data in real │
              │  time according to the webpage address  │
              └──────────────┬──────────────┘
                             │                        103
              ┌──────────────▼──────────────┐ ╮
              │ Cache the webpage snapshot data that is │
              │    acquired in a preset cache mode      │
              └──────────────┬──────────────┘
                             │                        104
              ┌──────────────▼──────────────┐ ╮
              │   Acquire a target webpage frame        │
              │ according to the webpage snapshot data  │
              │ that is cached in the preset cache mode │
              └──────────────┬──────────────┘
                             │
                    ┌────────▼────────┐
                    │       End       │
                    └─────────────────┘
```

FIG. 1

201

Enable a browser and establish a connection

202

Set a page attribute of the browser

203

Access a specified website

204

Track and process a page process and a network process

205

No — Determine whether a page is successfully accessed

Yes

206

Start a screenshot

207

Receive a screenshot data and mark a timestamp

208

Output a snapshot data

FIG. 2

FIG. 3

Start

Acquire a webpage address

401

Acquire a webpage snapshot data in real time according to the webpage address

402

Cache the webpage snapshot Data that is acquired in a periodic cache mode

403

Decode the webpage snapshot Data that is cached to obtain webpage frames

404

Select a target webpage frame from the webpage frames according to a timestamp

405

End

FIG. 4

Start

Cache the webpage snapshot data that is
received                                      501

Decode a latest webpage snapshot data        502

Output a target webpage frame                503

End

FIG. 5

Start

Acquire a webpage address — 601

Acquire a webpage snapshot data in real time according to the webpage address — 602

Cache the webpage snapshot
Data that is acquired in a periodic cache mode — 603

Select a target data from the webpage snapshot data that is cached according to a timestamp — 604

Decode the target data that is selected to obtain a target webpage frame — 605

End

FIG. 6

Start

Acquire a webpage address 701

Select a target cache mode from a plurality of preset cache modes according to the webpage address 702

Cache the webpage snapshot data that is acquired in a single cache mode 703

Cache one piece of the webpage snapshot data 704

Decode the webpage snapshot data that is cached to obtain a webpage frame 705

Take the webpage frame as a target webpage frame 706

End

FIG. 7

```
                    ┌─────────────────────┐
                    │        Start        │
                    └─────────────────────┘
                               │                      ╭ 801
                               ▼
        ┌──────────────────────────────────────────┐
        │          Acquire a webpage address        │
        └──────────────────────────────────────────┘
                               │                      ╭ 802
                               ▼
        ┌──────────────────────────────────────────┐
        │   Acquire a webpage snapshot data in real  │
        │   time according to the webpage address    │
        └──────────────────────────────────────────┘
                               │                      ╭ 803
                               ▼
        ┌──────────────────────────────────────────┐
        │    Cache the webpage snapshot data that is  │
        │       acquired in a preset cache mode       │
        └──────────────────────────────────────────┘
                               │                      ╭ 804
                               ▼
        ┌──────────────────────────────────────────┐
        │  Acquire a target webpage frame according   │
        │   to the webpage snapshot data that is       │
        │      cached in the preset cache mode         │
        └──────────────────────────────────────────┘
                               │                      ╭ 805
                               ▼
        ┌──────────────────────────────────────────┐
        │      Adjust a pixel format of the target    │
        │   webpage frame and a pixel format of a      │
        │   video to be synthesized to be the same     │
        └──────────────────────────────────────────┘
                               │                      ╭ 806
                               ▼
        ┌──────────────────────────────────────────┐
        │  Synthesize the target webpage frame with   │
        │        the video to be synthesized          │
        └──────────────────────────────────────────┘
                               │
                               ▼
                    ┌─────────────────────┐
                    │         End         │
                    └─────────────────────┘
```

FIG. 8

```
                    ╭ 901
        ┌─────────────────────┐
        │      Processor      │
        └─────────────────────┘
                 │
        ─────────┴─────────        ╭ 902
                 │
        ┌─────────────────────┐
        │       Memory        │
        └─────────────────────┘
```

FIG. 9

## INTERNATIONAL SEARCH REPORT

| | International application No. |
|---|---|
| | **PCT/CN2019/102056** |

**A. CLASSIFICATION OF SUBJECT MATTER**

G06F 16/958(2019.01)i

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT, CNKI, WPI, EPODOC, IEEE: 网页, 快照, 截图, 缓存, 模式, 周期, 预设, 设置, 时间戳, webpage, snapshot, screenshot, screen capture, cache, mode, set, preset, timestamp

**C. DOCUMENTS CONSIDERED TO BE RELEVANT**

| Category* | Citation of document, with indication, where appropriate, of the relevant passages | Relevant to claim No. |
|---|---|---|
| X | 愤怒的香蕉 (Non-official translation: Angry Banana). "SiteShoter绿色中文版1.42｜网页截图（支持定时和批处理） (Non-official translation: SiteShoter Green Chinese Version 1.42 ｜ Webpage screenshot (support timing and batch processing))" *https://www.rjno1.com/siteshoter-make-webpage-screenshot-support-batch-and-timing/*, 03 February 2016 (2016-02-03), pages 1-3 | 1, 5-10 |
| Y | 愤怒的香蕉 (Non-official translation: Angry Banana). "SiteShoter绿色中文版1.42｜网页截图（支持定时和批处理） (Non-official translation: SiteShoter Green Chinese Version 1.42 ｜ Webpage screenshot (support timing and batch processing))" *https://www.rjno1.com/siteshoter-make-webpage-screenshot-support-batch-and-timing/*, 03 February 2016 (2016-02-03), pages 1-3 | 2-4 |
| Y | Altumn (Altumn). "Selenium对当前浏览器窗口截图 (Non-official translation: Selenium screenshot of the current browser window)" *https://www.testclass.cn/selenium_screenshot.html*, 29 January 2019 (2019-01-29), page 2 | 2-4 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 March 2020** | **27 March 2020** |

| Name and mailing address of the ISA/CN | Authorized officer |
|---|---|
| **China National Intellectual Property Administration (ISA/CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

## INTERNATIONAL SEARCH REPORT

| International application No. |
| --- |
| **PCT/CN2019/102056** |

### C.    DOCUMENTS CONSIDERED TO BE RELEVANT

| Category* | Citation of document, with indication, where appropriate, of the relevant passages | Relevant to claim No. |
| --- | --- | --- |
| A | CN 109271092 A (ZHENXIANG NETWORK TECH BEIJING CO., LTD. et al.) 25 January 2019 (2019-01-25)<br>        entire document | 1-10 |
| A | CN 105808659 A (NUBIA TECHNOLOGY CO., LTD.) 27 July 2016 (2016-07-27)<br>        entire document | 1-10 |
| A | CN 106533926 A (WUHAN DOUYU NETWORK TECHNOLOGY CO., LTD.) 22 March 2017 (2017-03-22)<br>        entire document | 1-10 |
| A | CN 109889882 A (BEIJING EASUB INFORMATION TECH CO., LTD.) 14 June 2019 (2019-06-14)<br>        entire document | 1-10 |
| A | US 2019171351 A1 (PLEASE DON'T GO, LLC.) 06 June 2019 (2019-06-06)<br>        entire document | 1-10 |

Form PCT/ISA/210 (second sheet) (January 2015)

**INTERNATIONAL SEARCH REPORT**
Information on patent family members

International application No.

**PCT/CN2019/102056**

| Patent document cited in search report | | | Publication date (day/month/year) | Patent family member(s) | | | Publication date (day/month/year) |
|---|---|---|---|---|---|---|---|
| CN | 109271092 | A | 25 January 2019 | None | | | |
| CN | 105808659 | A | 27 July 2016 | WO | 2017148211 | A1 | 08 September 2017 |
| CN | 106533926 | A | 22 March 2017 | None | | | |
| CN | 109889882 | A | 14 June 2019 | None | | | |
| US | 2019171351 | A1 | 06 June 2019 | None | | | |

Form PCT/ISA/210 (patent family annex) (January 2015)

## REFERENCES CITED IN THE DESCRIPTION

**Patent documents cited in the description**

- CN 201910559472